# EUROPÄISCHE PATENTSCHRIFT

(11) **EP 3 417 935 B1**
(45) Veröffentlichungstag und Bekanntmachung des Hinweises auf die Patenterteilung: **17.11.2021**
(21) Anmeldenummer: 18178273.1
(22) Anmeldetag: 18.06.2018
(51) Int. Cl.: B01J 19/00, B01J 19/18, B01J 19/24

(54) **VERFAHREN ZUR KONTROLLE EINER CHEMISCHEN REAKTION**
METHOD FOR CONTROLLING A CHEMICAL REACTION
PROCÉDÉ DE CONTRÔLE D'UNE RÉACTION CHIMIQUE

(30) Priorität: 20.06.2017 EP 17176808
(43) Veröffentlichungstag der Anmeldung: 26.12.2018
(73) Patentinhaber: Fluitec Invest AG, 8442 Hettlingen (CH)
(72) Erfinder: EIHOLZER, Adrian, 8330 Pfäffikon (CH); ALTENBURGER, Daniel, 8413 Neftenbach (CH); ROSASCO, Esteban, 8353 Elgg (CH); MERKEL, Norbert, 78234 Engen (DE); MOSER, Marlies, 8478 Thalheim an der Thur (CH); GEORG, Alain, 8413 Neftenbach (CH)
(74) Vertreter: Clerc, Natalia

(56) Entgegenhaltungen:
- EP-A1- 2 311 554
- WO-A2-2004/109417
- US-A1- 2005 246 067
- US-A1- 2010 056 707
- US-A1- 2015 080 533

## Beschreibung

### TECHNISCHES GEBIET

Die vorliegende Erfindung betrifft ein Verfahren zur Kontrolle einer exothermen chemischen Reaktion in einem kontinuierlich betriebenen Reaktor.

### STAND DER TECHNIK

Die Sicherheit eines Produktionsprozesses in der chemischen Industrie spielt eine wichtige Rolle. Üblicherweise werden daher chemische Produktionsprozesse ständig überwacht, um mögliche Gefahrenzustände, die etwa zu Explosionen oder zu einer Freisetzung von Chemikalien führen können, zu vermeiden.

Viele chemische Reaktionen verlaufen exotherm und sind daher mit der Freisetzung von Wärme verbunden. Kann die pro Zeiteinheit freigesetzte Wärmemenge nicht ausreichend abgeführt werden, erwärmt sich die Reaktionsmasse selbst. In Folge dessen erhöht sich die Reaktionsgeschwindigkeit und die Reaktion beschleunigt sich. Ist diese Situation nicht mehr kontrollierbar, kommt es zur sogenannten thermischen Explosion, die aufgrund einsetzender Verdampfung und Gasentwicklung meist mit hohem Druckaufbau verbunden ist. Man spricht hier auch von einem "Durchgehen" oder "Runaway" der Reaktion.

Es ist bekannt, dass kontinuierlich betriebene Rohrreaktoren als deutlich sicherer gelten als Verfahren in grossen Rührkesseln, wie beispielsweise ein CSTR-Reaktor (continuously stirred reactor). Einerseits liegt dies an den geringeren Volumina, andererseits weist der Rohrreaktor ein besseres Oberflächen/Volumenverhältnis auf, so dass sich die Wärme in Rohrreaktoren besser abführen lässt.

Es stellt sich nun die Frage, ob eine Reaktion in kontinuierlich betriebenen chemischen Reaktoren generell auf einem höheren Temperaturniveau gefahren werden kann als in Rührkesseln und ob die Grenztemperatur Texo entsprechend höher angesetzt werden darf.

Die sicherheitstechnische Regel der deutschen Kommission für Anlagensicherheit TRAS410 aus dem Jahre 2012 besagt, dass die Grenztemperatur (Tₑₓₒ) die maximal zulässige Temperatur bezeichnet, bei der ein Stoff oder Reaktionsgemisch gerade noch gefahrlos gehandhabt werden kann. Sie wird unter Berücksichtigung der Verfahrensparameter und der Messverfahren, die bei der Ermittlung der Stoffkenngrößen angewendet wurden, festgelegt. So ist zum Beispiel bei einem kontinuierlichen Verfahren, bei dem die Stoffe nur verhältnismäßig kurzzeitig thermisch belastet wurden, die Grenztemperatur höher anzusetzen als bei einem Batch-Verfahren, bei dem die Stoffe über längere Zeit höheren Temperaturen ausgesetzt sein können.

Diese Regel weist somit eindeutig darauf hin, dass bei kontinuierlichen Verfahren mit höheren Temperaturdifferenzen als den üblichen 50°C gefahren werden kann. Leider werden jedoch keine zulässigen maximalen Temperaturdifferenzen für kontinuierliche Prozesse in Rohrreaktoren angegeben.

Es ist üblich, Steuerungen für den Betrieb, die Überwachung und die Sicherheit einer Anlage bzw. eines Systems vorzusehen.

PLT-Betriebs- und Überwachungseinrichtungen (PLT=Prozessleittechnik) mit entsprechenden PLT-Steuerungen sind bekannt. Sie bestehen für exotherme Reaktionen im Wesentlichen aus zwei Elementen:
- Überwachung des Durchgehens der Reaktion durch Alarmierung bei Überschreiten eines bestimmten Maximalwerts der Reaktorinnentemperatur,
- Überwachung/Alarmierung bei Edukt-Akkumulation.

Mit einer Edukt-Akkumulation im Reaktor ist einerseits die Gefahr eines Einschlafens der Reaktion verbunden, andererseits besteht die Gefahr des Wanderns der Reaktion. Ein unkalkulierbares Sicherheitsrisiko besteht darin, dass das nicht reagierte Reaktionsgemisch nach dem Reaktor beispielsweise im Auffangbehälter oder in einem anderen Apparat durchgehen kann. Für eine zuverlässige Reaktionsüberwachung ist es daher erforderlich, die durch akkumulierte Edukte im Reaktor vorhandene, noch nicht freigesetzte Reaktionsenthalpie zu jedem Zeitpunkt genau zu kennen.

In der EP 3 181 221mit dem Titel "Verfahren zur Überwachung einer chemischen Reaktion und Reaktor" wird ein In-Line-Verfahren für Rohrreaktoren beschrieben, welches eine umfangreiche Überwachung eines kontinuierlichen chemischen Prozesses in Rohrreaktoren zulässt. Eine Akkumulation oder ein Wandern der chemischen Reaktion wird frühzeitig und schnell erkannt.

US 2015/0080533 A1 beschreibt einen 2 Loop Reaktor mit Sicherheitsventilen. Das System besitzt eine schadensbegrenzende Schutzeinrichtung mit Sicherheitsventilen (PRV). Es wird hierzu ein Katalysatorgift in den Reaktor eingebracht. Inerte Stoffe werden verwendet, um während der Reaktion den Fluss zu gewährleisten und eine Verstopfung zu verhindern. Ferner werden eine Druckentlastung und eine Spülung des Reaktors erwähnt.

### DARSTELLUNG DER ERFINDUNG

Es ist deshalb eine Aufgabe der Erfindung, eine effiziente und sichere Massnahme zur Verhinderung eines unkontrollierten Reaktionsablaufs in einem kontinuierlich betriebenen Reaktor, insbesondere einem Rohrreaktor, anzubieten; dies insbesondere dann, wenn eine Akkumulation oder ein Wandern der Reaktion erkannt wird.

Diese Aufgabe löst ein Verfahren zur Kontrolle einer chemischen Reaktion in einem kontinuierlich betriebenen Reaktor mit den Merkmalen des Patentanspruchs 1.

Das erfindungsgemässe Verfahren dient der Kontrolle einer chemischen, insbesondere exothermen, Reaktion in einem kontinuierlich betriebenen Reaktor mit mindestens einem Rohrabschnitt, wobei der Reaktor einen Zulauf, einen Ablauf und eine zwischen Zu- und Ablauf verlaufende Hauptströmungsrichtung aufweist. Gemäss dem Verfahren werden dem Reaktor über den Zulauf Stoffe zugeführt und im Reaktor entsteht ein Produktgemisch aus diesen Stoffen und ihren Umsetzungsprodukten, wobei die Reaktion überwacht wird und zur Verhinderung eines unkontrollierten Reaktionsablaufs Massnahmen ergriffen werden. Diese Massnahme weisen mindestens folgende Schritte auf
- Unterbrechung des Zulaufs und des Ablaufs,
- aktive Druckentlastung des Reaktors und
- Spülung des Reaktors mit einem inerten Stoff.

Der Reaktor ist ein Leerrohr oder ein Rohr mit mindestens einem Mischer-Wärmetauscher oder mindestens einem statischen Mischer. Der Reaktor ist kontinuierlich betrieben und somit kein Rührkessel, insbesondere ist er kein Rührwerk und kein CSTR Reaktor.

Die Hauptströmungsrichtung eines Reaktors ist die geradlinige Verbindung von Eingang und Ausgang des Reaktors bzw. im Falle von mehreren durch Leitungen miteinander verbundenen Reaktorabschnitten die geradlinige Verbindung zwischen den Ein- und Ausgängen der jeweiligen Reaktorabschnitte. Diese Hauptströmungsrichtung entspricht üblicherweise der Richtung der Längsausdehnung des Reaktors.

Die Überwachung der Reaktion erfolgt entweder wie in der eingangs erwähnten EP 3 181 221 mittels Wärmebilanzerfassung und lokaler Temperaturmessung. Dadurch lässt sich eine Akkumulation und/oder ein Wandern der Reaktion sicher erfassen. Zusätzlich oder alternativ sind Sonden zur Messung von Stoffeigenschaften (beispielsweise Brechungsindex-, pH-Sonden, Infrarot-, NIR-, Raman- und ATR-Sonden) vorhanden, welche ein Wandern am Austritt des Reaktors feststellen.

Dieses erfindungsgemässe Verfahren ermöglicht es, einen Produktionsprozess schnell und sicher zu unterbrechen, so dass anschliessend die Ursache der Akkumulation oder des Wanderns der Reaktion untersucht werden kann. Zudem verhindert das erfindungsgemässe Verfahren ein lokales Durchgehen der Reaktion, so dass es zu keiner Kettenreaktion im System kommen kann, z.B. auf einen allenfalls nachgeschalteten Verweilreaktor oder auf einen allenfalls vorhandenen Vorlagebehälter.

Dank der Unterbrechung des Zulaufs und des Auslaufs ist eine vollständige Abschottung des Reaktorvolumens erreicht. Als Absperrmittel eignen sich Absperrarmaturen wie Kugelhähne, Nadelventile, Absperrklappen oder ähnliches. Vorzugsweise sind sie redundant und/oder gekühlt ausgeführt. Die redundante Ausführung gewährleistet eine vollständige Abschottung. Die Kühlung verhindert ein Durchgehen in den Rohrleitungen.

Dank des erfindungsgemässen Verfahrens lassen sich Reaktionen mit höheren zulässigen Temperaturdifferenzen durchführen. Die Vorteile dieser höheren Temperaturdifferenzen sind:
- Die Reaktionen verlaufen schneller und es sind somit kleinere Verweilzeiten notwendig. Dies führt direkt zu geringeren Investitionskosten.
- Die Verwendung von Lösungsmitteln kann reduziert oder es kann sogar vollständig darauf verzichtet werden. Dies bedeutet, dass man auf zusätzliche energieintensive Trennverfahren verzichten kann oder zumindest erhebliche Energieeinsparungen erzielen kann.

In bevorzugten Varianten des Verfahrens erfolgen die aktive Druckentlastung und die Spülung erst nach Unterbrechung des Zulaufs und des Ablaufs.

Die Druckentlastung des Reaktors erfolgt vorzugsweise nach der Abschottung des Reaktorvolumens, jedoch noch bevorzugter unmittelbar darauf. Die aktive Druckentlastung erfolgt vorzugweise unmittelbar nach erkannten Störungen, vorzugsweise mittels Öffnen von Absperrvorrichtungen.

Die aktive Druckentlastung und die Spülung mit dem inerten Stoff erfolgen gleichzeitig.

Eine passive Druckentlastung lässt sich durch ein Sicherheitsventil gewährleisten. Vorzugsweise kommt dieses jedoch nicht zum Einsatz und ist lediglich als redundantes Sicherheitselement vorhanden.

Vorzugsweise erfolgt die Spülung entgegen der Hauptströmungsrichtung des Reaktors, d.h. rückwärts zum Reaktoreintritt. Vorzugsweise wird dabei ein erster Anteil des Produktgemischs, nämlich das reaktive Gemisch mit der höchsten adiabatischen Temperaturerwärmung, zuerst aus dem Reaktor gespült. Ein zweiter Anteil des Produktgemischs, welcher bereits als reaktives Produkt vorliegt, d.h. welches infolge längerer Verweilzeit bereits teilweise oder ganz umgesetzt ist, wird den Reaktor später verlassen als der erste Anteil.

Vorzugsweise ist der Reaktor senkrecht angeordnet, so dass die Hauptströmungsrichtung in vertikaler Richtung verläuft. Vorzugsweise erfolgt die Spülung in diesem Fall von oben nach unten, entweder in Hauptströmungsrichtung oder bevorzugter in Gegenrichtung dazu.

Besteht der Reaktor aus mehreren Rohrsegmenten, welche über Leitungen miteinander verbunden sind, so sind diese Segmente vorzugsweise übereinander von unten nach oben gestapelt und in Serie geschaltet, wobei der Reaktoreintritt vorzugsweise unten und der Reaktoraustritt oben liegt.

Diese vertikale Anordnung sowie die Spülung in Gegenrichtung sind insbesondere dann vorteilhaft, wenn ein Gas als inerten Stoff verwendet wird. Das Gas drückt bei dieser Anordnung das Reaktorgemisch, welches üblicherweise flüssig ist, von oben nach unten aus dem Reaktor hinaus. Dies beschleunigt die Spülung. Als inerte Gase eignen sich beispielsweise Stickstoff und Argon.

Die Verwendung von Gas als inerten Stoff eignet sich nicht nur bei vertikaler Anordnung sondern auch bei horizontaler Anordnung, da der durch Gas entstehende stetig abnehmende Füllgrad einen Druckanstieg im Falle eines Durchgehens im Reaktor auf jeden Fall sicher verhindert. Zudem verhindern die Einbauten, insbesondere bei Mischer-Wärmetauschern, ein Durchschiessen des Gases, so dass die Flüssigkeit in Bewegung bleibt und somit die stete Kühlung auch bei einem stehenden System sichergestellt ist.

Bei Verwendung einer Flüssigkeit als inerten Stoff ist der Reaktor ebenfalls vorzugsweise vertikal angeordnet. Die Spülung kann in Hauptströmungsrichtung oder in Gegenrichtung erfolgen. Eine Anordnung des Reaktors in anderen Positionen, wie beispielsweise waagrecht, ist ebenfalls möglich und bei Verwendung von inerten Flüssigkeiten praktisch gleichwertig wie die vertikale Ausrichtung. Beispiele von Flüssigkeiten sind Lösungsmittel wie beispielsweise Isopropanol oder Wasser.

Vorzugsweise wird das Produktgemisch mittels des inerten Stoffs mit Druck aus dem Reaktor gespült. Dies ist insbesondere bei vertikaler Anordnung und Spülung in Gegenrichtung mit einem inerten Gas der Fall. Das Reaktionsgemisch strömt dadurch und es somit ist eine stete Kühlung bei einem geschlossenen System sicherstellt.

Vorzugsweise wird das aus dem Reaktor gespülte Reaktionsgemisch in einen mit einem zweiten inerten Stoff versehenen Auffangbehälter gespült. Vorzugsweise wird das Reaktionsgemisch in den Auffangbehälter gedrückt.

Zur Wegbereitung in den Auffangbehälter werden üblicherweise Absperrarmaturen aktiv. Sie sind beispielsweise gesteuerte Ventile, wobei auch andere Arten von Absperrarmaturen eingesetzt werden können. Federöffnende Absperrarmaturen haben den Vorteil, dass sie auch bei einem Stromausfall im System einsetzbar sind.

Vorzugsweise wird das Reaktionsgemisch mittels einer Strahlpumpe, einer Düse, einem Rohrlochverteiler oder einem ähnlichen Mittel im Auffangbehälter verteilt und mit dem zweiten inerten Stoff vermischt. Ein solcher Auffangbehälter wird üblicherweise auch als Quenchbehälter bezeichnet.

Vorzugsweise ist der im Auffangbehälter befindliche zweite inerte Stoff eine inerte Flüssigkeit. Der zweite inerte Stoff ist üblicherweise ein Lösungsmittel oder eine Flüssigkeit ohne Zersetzungspotential.

Das System zur Durchführung des erfindungsgemässen Verfahrens weist einen kontinuierlich betreibbaren Reaktor, insbesondere einen Rohrreaktor, mit einer Hauptströmungsrichtung, mit einem Zulauf zur Zuführung von Stoffen in den Reaktor und mit einem Auslauf zur Abführung des aus den Stoffen durch chemische Reaktion entstehenden Produktes auf. Das System weist eine Steuerung auf zur Überwachung der Reaktion im Reaktor. Es weist ferner Sicherheitsmittel zur Verhinderung eines unkontrollierten Reaktionsablaufs, wobei diese Sicherheitsmittel umfassen:
- mindestens ein erstes Absperrmittel zur Absperrung des Zulaufs
- mindestens ein zweites Absperrmittel zur Absperrung des Auslaufs,
- ein Spülmittelreservoir und eine Spülleitung vom Spülmittelreservoir zum Reaktor, wobei die erste Spülleitung mit mindestens einem dritten Absperrmittel versehen ist und
- einen Auffangbehälter für aus dem Reaktor gespültes Reaktionsgemisch sowie eine Auffangleitung vom Reaktor zum Auffangbehälter, wobei die Auffangleitung mit mindestens einem vierten Absperrmittel versehen ist,
wobei sich die genannten Absperrmittel mittels der Steuerung nach Massgabe der Mittel zur Überwachung der Reaktion öffnen und schliessen lassen.

Die Steuerung ist vorzugsweise eine elektronische Steuerung und ist vorzugsweise kontinuierlich im Einsatz. Vorzugsweise ist auch eine Sicherheitseinrichtung vorhanden, welche Sicherheitsventile und/oder Berstscheiben aufweist.

Vorzugsweise ist im Auffangbehälter eine Strahlpumpe, eine Düse oder ein Rohrlochverteiler angeordnet zur statischen Vermischung des zurückgespülten Reaktorgemischs mit einem im Auffangbehälter befindlichen zweiten inerten Stoff.

Vorzugsweise ist der Reaktor in vertikaler Richtung angeordnet und die Hauptströmungsrichtung erfolgt von unten nach oben.

Vorzugsweise führt die Spülleitung vom Spülreservoir zum oberen Ende des Reaktors, so dass das Spülmittel in Gegenrichtung zur Hauptströmungsrichtung von oben nach unten durch den Reaktor fliesst.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
Figur 1 eine schematische Darstellung eines Systems für das erfindungsgemässen Verfahren mit drei horizontalen Reaktorabschnitten und mit einer Spülvorrichtung;
Figur 2 eine schematische Darstellung eines Systems für das erfindungsgemässen Verfahren mit einem vertikalen Reaktor und mit einer Spülvorrichtung und
Figur 3 eine schematische Darstellung einer Variante des Systems gemäss Figur 1. BESCHREIBUNG BEVORZUGTER AUSFÜHRUNGSFORMEN

Im Folgenden werden drei Ausführungsformen des Systems beschrieben, anhand welchen sich das erfindungsgemässe Verfahren verstehen lässt.

Die Abbildungen sind rein schematisch. Nicht dargestellt sind beispielsweise die Mittel, welche die Reaktion überwachen sowie die elektronische Steuerung. Vorzugsweise werden die Mittel und die Auswertung verwendet, wie sie in der noch unveröffentlichten EP 15 200 463.6 beschrieben sind.

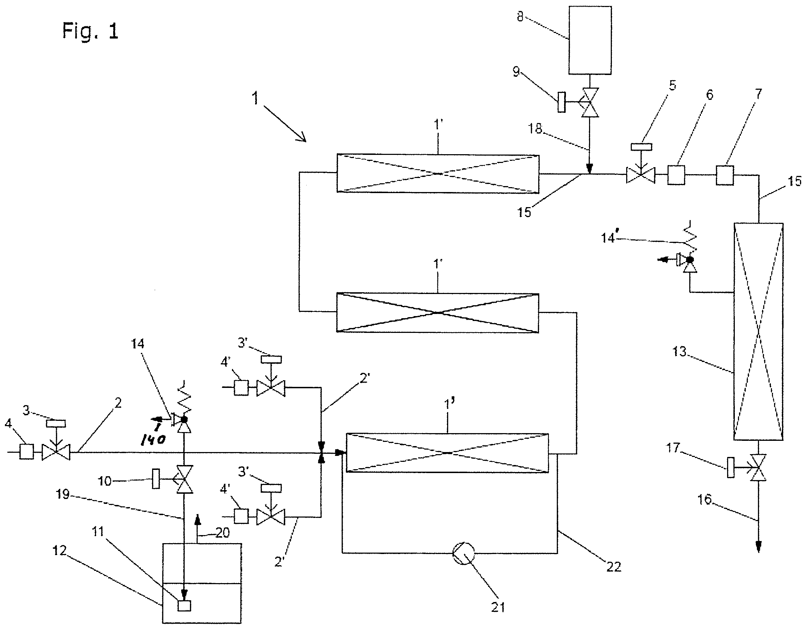

Das System gemäss Figur 1 weist einen kontinuierlich betriebenen Rohrreaktor 1 mit mindestens einem Rohrabschnitt 1' auf. Sind mehrere Rohrabschnitte 1' vorhanden, so sind sie vorzugsweise in Serie hintereinander geschaltet. Vorzugsweise ist mindestens einer der Rohrabschnitte, vorzugsweise alle Rohrabschnitte 1' zwecks Temperierung (d.h. Erwärmung oder Kühlung) von einem Wärmeträgermedium durchströmt. Vorzugsweise sind die Rohrabschnitte mit einem statischen Mischer oder einem Mischer-Wärmetauscher versehen.

Mindestens bei Verwendung der Prozessüberwachung gemäss EP 15 200 462 sind die Rohrabschnitte so gewählt, dass der Temperaturverlauf des Wärmeträgermediums in jeweiligen Rohrabschnitt annähernd linear verläuft.

Dem Reaktor 1 wird über mindestens eine Zuführungsleitung 2, 2', dem Zulauf, Stoffe zugeführt. Die Stoffe sind Edukte wie Hauptkomponenten, Additive, Aktivatoren, Lösungsmittel, Emulsionszusätze und Katalysatoren. Sie können in flüssiger, gasförmiger oder teils in fester Form vorliegen. Zudem können die Reaktionen in einer verdünnten Lösung oder auch in einer Dispersion durchgeführt werden.

In den Zuführungsleitungen 2, 2' sind erste Durchflussmesser 4, 4' vorhanden, welche den Durchfluss der zugeführten Stoffe messen. Jede Zuführungsleitung 2, 2' ist ferner mit mindestens einer, vorzugsweise zwei oder mehr ersten Absperrvorrichtungen 3, 3' versehen, auch Absperrarmaturen genannt. Diese ersten Absperrvorrichtungen 3, 3' sind vorzugsweise in Strömungsrichtung zum Reaktor 1 hin nach den Durchflussmessern 4, 4' angeordnet. Sie können jedoch auch vor diesen angeordnet sein. In mindestens einer der Zuführungsleitungen 2, 2' ist ferner ein erstes Sicherheitsventil 14 mit einer Austrittsleitung 140 angeordnet. Das erste Sicherheitsventil 14 ist vorzugsweise zwischen zwei ersten Absperrvorrichtungen 3, 3'angeordnet, wie in Figur 1 dargestellt. Im Falle einer einzigen ersten Absperrrichtung 3 ist das Sicherheitsventil 14 vorzugsweise in Hauptströmungsrichtung nach der ersten Absperrvorrichtung 3 angeordnet.

Die ersten Absperrvorrichtungen 3, 3' sind mit einer nicht dargestellten elektronischen Steuerung verbunden und werden nach Massgabe dieser Steuerung geschlossen. Die Absperrvorrichtungen sind vorzugsweise Ventile, Kugelhähne oder Absperrklappen. Vorzugsweise sind sie federschliessend.

Die Produkte der im Reaktor 1 durchgeführten chemischen Reaktion werden über einen Auslauf, genauer eine Auslaufleitung 15, abgeführt. Im hier dargestellten Beispiel gelangen sie in einen Verweilzeitreaktor 13, bevor sie über einen Endleitung 16 weitergeleitet werden.

Als Variante lässt sich bei einem oder mehreren der der Rohr- oder Reaktorabschnitte 1', vorzugsweise beim in Strömungsrichtung erstem Rohrabschnitt 1', eine Kreislaufleitung 22 vorsehen. Diese ist in Figur 1 dargestellt. Mittels einer Pumpe 21 wird das Reaktionsgemisch am Auslauf des entsprechenden, hier des ersten Rohrabschnitts 1' zurückgeführt und in Hauptströmungsrichtung weiter oben wieder in den Reaktor eingeführt. Im dargestellten Beispiel führt die Leitung wieder zum Zulauf des ersten Reaktorabschnitts 1. Dieses Verfahren und die Vorteile davon sind in WO 2017/080909 ausführlich beschrieben.

Zwischen Reaktor 1 und Verweilzeitreaktor 13 ist mindestens eine zweite Absperrvorrichtung 5 vorhanden. Auch diese ist vorzugsweise redundant vorhanden, so dass zwei oder mehrere derartige zweite Absperrvorrichtungen 5 in der Auslaufleitung 15 angeordnet sind. Die zweite Absperrvorrichtung 5, auch Absperrarmatur genannt, ist ebenfalls mit der Steuerung verbunden und mittels dieser schliessbar. Sie ist ebenfalls vorzugsweise federschliessend.

Vorzugsweise ist in der Auslaufleitung 15 zwischen Reaktor 1 und Verweilzeitreaktor 13 ein zweiter Durchflussmesser 6 zur Messung der Summe der Volumenströme des Produkts vorhanden sowie eine Sonde 7 zur Messung von Stoffeigenschaften.

Die zweite Absperrvorrichtung 5 ist vorzugsweise in Strömungsrichtung vor diesen Vorrichtungen, wie zweiter Durchflussmesser 6 und Sonde 7 angeordnet.

Der Verweilzeitreaktor 13 verfügt vorzugsweise über ein zweites Sicherheitsventil 14'. In der Endleitung 16 ist vorzugsweise ein weiteres Absperrventil 17 angeordnet.

Das System verfügt ferner über eine Vorlage für einen inerten Stoff, insbesondere einem inerten Gas oder einer inerten Flüssigkeit. In den Figuren ist diese Vorlage ein Spülmittelreservoir 8. Eine Spülleitung 18 führt vom Reservoir 8 zum Auslauf des Reaktors 1. Diese Spülleitung 18 ist mit einer dritten Absperrvorrichtung 9 verschlossen, welche ebenfalls mit der Steuerung verbunden ist und welche vorzugsweise federöffnend ist. Die Spülleitung 18 mündet vorzugsweise in die Auslaufleitung15, jedoch in Strömungsrichtung des Produkts vor der zweiten Absperrvorrichtung 5.

Im Zulauf des Reaktors 1 zweigt eine Auffangleitung 19 ab, welche mit einer vierten Absperrvorrichtung 10 verschlossen ist. Diese vierte Absperrvorrichtung 10 ist auch mit der Steuerung verbunden. Sie ist federöffnend.

Die dritten und die vierte Absperrvorrichtungen sind vorzugsweise wiederum redundant vorhanden.

Die Auffangleitung19 führt zu einem Auffangbehälter 12. Im Auffangbehälter 12 befindet sich vorzugsweise ein inerter Stoff, vorzugsweise eine inerte Flüssigkeit. Es kann derselbe Stoff sein wie im Spülmittelbehälter 8 vorliegt oder ein anderer Stoff. Insbesondere kann der Spülmittelbehälter 8 mit einem inerten Gas und der Auffangbehälter 12 mit einer inerten Flüssigkeit gefüllt sein.

Im Auffangbehälter 12 sind vorzugsweise Mittel zur Durchmischung 11 vorhanden, wie beispielsweise eine Strahlpumpe und/oder eine Düse und/oder ein Rohrlochverteiler.

Ergibt sich nun aus Daten der nicht dargestellten Mittel zur Überwachung der Sicherheit, dass ein unkontrollierter Verlauf der chemischen Reaktion im Reaktor 1 droht, so schliesst die Steuerung die erste und alle zweiten Absperrvorrichtungen 3, 3', 5 und schottet somit den Reaktor 1 vom Zulauf 2, 2' und Auslauf 15, insbesondere vom Verweilzeitreaktor 13 ab.

Die Steuerung öffnet zudem die dritte und vierte Absperrvorrichtung 9, 10. Spülmittel, d.h. die inerte Flüssigkeit oder das inerte Gas, werden unter Druck in den Reaktor 1 geführt und durchströmen diesen in entgegen gesetzter Richtung zur Hauptströmungsrichtung des Reaktors 1. Dabei drückt das Spülmittel das Reaktionsgemisch aus dem Reaktor 1 hinaus zum Auffangbehälter 12 hin. Dort wird es über die Mittel zur Durchmischung 11 verteilt und relativ schnell mit dem bereits im Auffangbehälter befindlichen zweiten inerten Stoff vermischt.

Während dieses Vorgangs wird der Reaktor zudem druckentlastet bzw. entlüftet. Dies erfolgt durch das Öffnen der dritten und vierten Absperrvorrichtungen 9, 10. Ein allfälliger Überschuss an Inertstoff kann über die Leitung 20 abgeführt werden. Üblicherweise wird der Überschuss an die Atmosphäre über eine Fackel oder über einen Wäscher abgeführt. Der Überschuss kann jedoch auch zwecks Reinigung oder zum Waschen abgeführt werden.

Die chemische Reaktion wird dadurch effizient und sicher unterbrochen und ein Schaden kann vermieden werden.

In der Ausführungsform gemäss Figur 1 ist der Reaktor 1 mit drei liegenden Rohrabschnitten 1' dargestellt. Die Spülung findet somit mit liegenden Rohren statt. Diese Anordnung eignet sich sowohl bei Verwendung von Flüssigkeiten oder Gas als inertes Spülmittel.

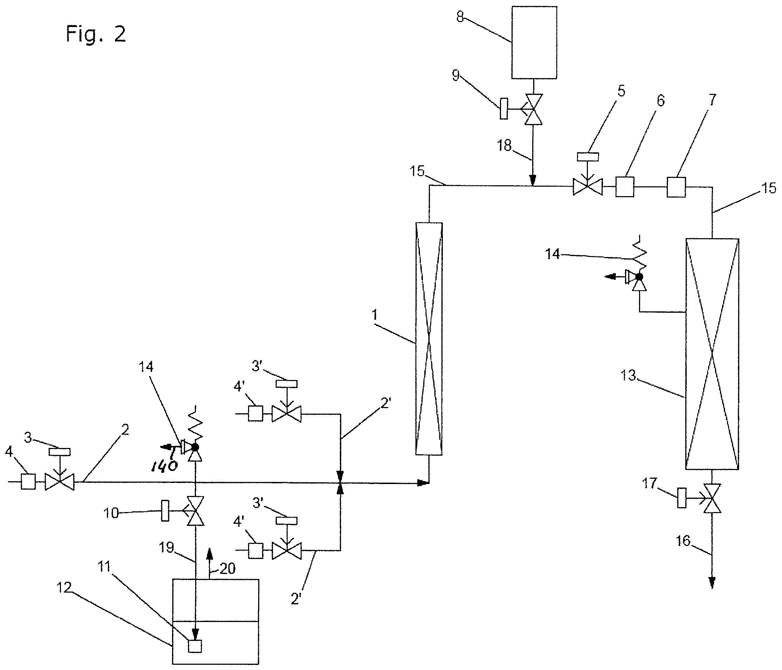

In der Ausführungsform gemäss Figur 2 ist der Reaktor 1 vertikal ausgerichtet. Der Zulauf befindet sich unten, der Auslauf oben. Das Spülmittel wird von oben nach unten in den Reaktor 1 eingeführt. Dies ist insbesondere bei Verwendung eines Gases als inertes Spülmittel vorteilhaft, da das Gas durch diese Anordnung das flüssige Reaktionsgemisch nach unten Richtung Zulauf und in den Auffangbehälter 12 drückt und die Entleerung des Reaktors im Notfall noch schneller erfolgt. Auch diese vertikale Ausführungsform kann mit mehreren in Serie geschalteten Rohrabschnitten 1' ausgeführt werden, wobei die Rohrabschnitte in diesem Fall vorzugsweise übereinander gestapelt werden, so dass der Auslauf des unteren Rohrabschnitts 1 jeweils unterhalb des Zulaufs des oberen Rohrabschnitts 1' liegt.

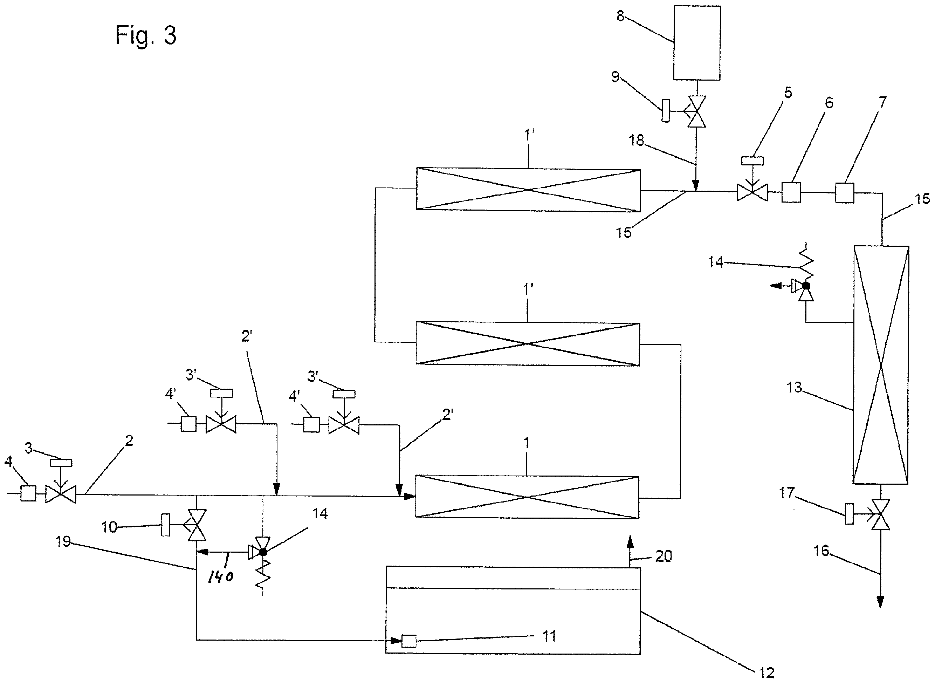

Die Ausführungsform gemäss Figur 3 ist eine Variante des Systems gemäss Figur 1. Diese Variante lässt sich auch in der Ausführungsform gemäss Figur 2 einsetzen. Es hat sich in den oben beschriebenen Systemen gezeigt, dass bei einer Zersetzung sehr grosse Gasvolumenströme entstehen können, so dass sowohl die Abführleitung 19 als auch die Austrittsleitung 140 nach dem Sicherheitsventil 14 zum Auffangbehälter 12 gross gewählt werden müssen. Beim Spülvorgang sind die Mengen allerdings vergleichbar klein. Dies kann dann problematisch werden, wenn die reagierende Flüssigkeit sowohl in der Abführleitung 19 als auch in der Austrittsleitung 140 nach dem ersten Sicherheitsventil 14 liegen bleibt und es dann zu einer Zersetzung kommt.

Im Ausführungsbeispiel gemäss Figur 3 ist deshalb die Austrittsleitung 140 des ersten Sicherheitsventils 14 mit der Abführleitung 19 verbunden. Die Abführleitung 19 ist vorzugsweise möglichst kurz und sie weist ein Gefälle auf. Die Abführleitung 19 führt die reagierende Flüssigkeit in den Auffangbehälter 12 und verdünnt diese noch bevor eine Zersetzung stattfinden kann. Der Auffangbehälter 12 bildet somit einen sogenannten Quench-Behälter. Sollte es doch noch zu einer Zersetzung kommen, so kann das zersetzende Gas über die Abführleitung 20 abgeführt werden.

Das erfindungsgemässe Verfahren ermöglicht eine effiziente und sichere Unterbrechung eines chemischen Prozesses in einem kontinuierlich betriebenen Reaktor, insbesondere einem Rohrreaktor.

**BEZUGSZEICHENLISTE**

| | | | |
|---|---|---|---|
| 1 | Reaktor | 13 | Verweilzeitreaktor |
| 1' | Rohrabschnitt | 14 | Sicherheitsventil |
| 2,2' | Zuführleitung | 140 | Austrittsleitung |
| 3,3' | erste Absperrvorrichtung | 14' | Sicherheitsventil |
| 4,4' | erste Durchflussmesser | 15 | Auslaufleitung |
| 5 | zweite Absperrvorrichtung | 16 | Endleitung |
| 6 | zweiter Durchflussmesser | 17 | Absperrventil |
| 7 | Sonde | 18 | Spülleitung |
| 8 | Spülmittelreservoir | 19 | Auffangleitung |
| 9 | dritte Absperrvorrichtung | 20 | Abführleitung |
| 10 | vierte Absperrvorrichtung | 21 | Pumpe |
| 11 | Mittel zur Durchmischung | 22 | Kreislaufleitung |
| 12 | Auffangbehälter | | |

## Patentansprüche

1. Verfahren zur Kontrolle einer exothermen chemischen Reaktion in einem kontinuierlich betriebenen Reaktor (1) mit mindestens einem Rohrabschnitt (1'), wobei der Reaktor (1) einen Zulauf (2, 2'), einen Ablauf (15) und eine zwischen Zu- und Ablauf verlaufende Hauptströmungsrichtung aufweist und wobei der Reaktor ein Leerrohr oder ein Rohr mit einem Mischer-Wärmetauscher oder ein Rohr mit einem statischen Mischer ist,
- wobei dem Reaktor (1) über den Zulauf Stoffe zugeführt werden und im Reaktor (1) ein Produktgemisch aus diesen Stoffen und ihren Umsetzungsprodukten entsteht,
- wobei die Reaktion mittels Wärmebilanzerfassung und lokaler Temperaturmessung überwacht wird, wodurch die Überwachung eine Akkumulation und/oder ein Wandern der chemischen Reaktion erfasst
- und/oder wobei die Reaktion mittels Sonden zur Messung von Stoffeigenschaften überwacht wird, welche ein Wandern am Austritt des Reaktors feststellen,
- wobei zur Verhinderung eines unkontrollierten Reaktionsablaufs Massnahmen ergriffen werden, wodurch die chemische Reaktion unterbrochen wird zur Vermeidung eines lokalen Durchgehens der Reaktion und einer Kettenreaktion,
- wobei diese Massnahme mindestens folgende Schritte aufweisen
- Unterbrechung des Zulaufs und des Ablaufs,
- aktive Druckentlastung des Reaktors und
- Spülung des Reaktors mit einem inerten Stoff, wodurch das Produktgemisch aus dem Reaktor gespült wird,
- wobei die aktive Druckentlastung und die Spülung gleichzeitig erfolgen.

2. Verfahren nach Anspruch 1, wobei die aktive Druckentlastung und die Spülung erst nach Unterbrechung des Zulaufs und des Ablaufs erfolgen.

3. Verfahren nach einem der Ansprüche 1 bis 2, wobei die Spülung entgegen der Hauptströmungsrichtung des Reaktors erfolgt.

4. Verfahren nach einem der Ansprüche 1 bis 3, wobei die Hauptströmungsrichtung in vertikaler Richtung verläuft und die Spülung von oben nach unten erfolgt.

5. Verfahren nach einem der Ansprüche 1 bis 4, wobei ein inertes Gas als inerten Stoff für die Spülung verwendet wird.

6. Verfahren nach einem der Ansprüche 1 bis 4, wobei eine inerte Flüssigkeit als inerten Stoff für die Spülung verwendet wird.

7. Verfahren nach einem der Ansprüche 1 bis 6, wobei das Produktgemisch mittels des inerten Stoffs mit Druck aus dem Reaktor gespült wird.

8. Verfahren nach einem der Ansprüche 1 bis 7, wobei das aus dem Reaktor gespülte Produktgemisch in einen mit einem zweiten inerten Stoff versehenen Auffangbehälter gespült wird.

9. Verfahren nach Anspruch 8, wobei das Produktgemisch mittels eines Mittels zur Durchmischung im Auffangbehälter verteilt und mit dem zweiten inerten Stoff vermischt wird.

10. Verfahren nach Anspruch 9, wobei als Mittel zur Durchmischung eine Strahlpumpe oder eine Düse oder ein Rohrlochverteiler verwendet wird.

11. Verfahren nach einem der Ansprüche 8 bis 10 , wobei der zweite inerte Stoff eine inerte Flüssigkeit ist.

## Claims

1. Method for monitoring an exothermic chemical reaction in a continuously operated reactor (1) with at least one tube section (1'), wherein the reactor (1) has an intake (2, 2'), an outlet (15) and a main flow direction running between the intake and the outlet, wherein the reactor is an empty tube or a tube with at mixer-heat exchanger or a tube with a static mixer,
- wherein substances are supplied to the reactor (1) via the intake and a product mixture made up of these substances and the solidified products thereof is created in the reactor (1),
- wherein the reaction is monitored by means of thermal balance detection and local temperature measurement, whereby the monitoring detects an accumulation and/or a migration of the chemical reaction
- and/or wherein the reaction is monitored by means of probes for measuring substance properties which identify migration at the reactor outlet
- wherein measures are taken to prevent an uncontrolled reaction process, whereby the reaction is interrupted to prevent a local runaway and a chain reaction,
- wherein these measures comprise at least the following steps:
- interruption of the intake and outlet,
- active pressure relief of the reactor and
- flushing of the reactor with an inert substance, whereby the product mixture is flushed out of the reactor,
- whereby the active pressure relief and the flushing take place simultaneously.

2. Method according to Claim 1, wherein active pressure relief and flushing take place only after the intake and outlet have been interrupted.

3. Method according to one of Claims 1 to 2, wherein flushing takes place against the main flow direction of the reactor.

4. Method according to one of Claims 1 to 3, wherein the main flow direction runs in a vertical direction and flushing takes place from top to bottom.

5. Method according to one of Claims 1 to 4, wherein an inert gas is used as the inert substance for flushing.

6. Method according to one of Claims 1 to 4, wherein an inert liquid is used as the inert substance for flushing.

7. Method according to one of Claims 1 to 6, wherein the product mixture is flushed at pressure from the reactor by means of the inert substance.

8. Method according to one of Claims 1 to 7, wherein the product mixture flushed from the reactor is flushed in a collecting tank provided with a second inert substance.

9. Method according to Claim 8, wherein the product mixture is distributed in the collecting tank by means of a mixing means and mixed with the second inert substance.

10. Method according to Claim 9, wherein a jet pump or a nozzle or a tube hole distributor is used as a mixing means.

11. Method according to one of Claims 8 to 10, wherein the second inert substance is an inert liquid.

## Revendications

1. Procédé de contrôle d'une réaction chimique exothermique dans un réacteur à fonctionnement continu (1) comprenant au moins une portion tubulaire (1'), le réacteur (1) comportant une admission (2, 2'), une évacuation (15) et présentant un sens d'écoulement principal entre l'admission et l'évacuation et le réacteur étant un tube vide ou un tube pourvu d'un mélangeur-échangeur de chaleur ou un tube pourvu d'un mélangeur statique,
- des substances étant amenées au réacteur (1) par le biais de l'admission et un mélange produit, formé de ces substances et de leurs produits de réaction, étant généré dans le réacteur (1),
- la réaction étant surveillée au moyen d'une détection de bilan thermique et d'une mesure de température locale, ce qui permet à la surveillance de détecter une accumulation et/ou une migration de la réaction chimique,
- et/ou la réaction étant surveillée au moyen de sondes de mesure de propriétés de substances qui détectent une migration au niveau de la sortie du réacteur,
- des mesures étant prises pour éviter un déroulement incontrôlé de la réaction, ce qui permet d'interrompre la réaction chimique afin d'éviter un emballement local de la réaction et une réaction en chaîne,
- ces mesures comportant au moins les étapes suivantes
- interruption de l'admission et de l'évacuation,
- dépressurisation active du réacteur et
- rinçage du réacteur avec une substance inerte, ce qui permet d'éliminer du réacteur le mélange produit par rinçage,
- la dépressurisation active et le rinçage étant effectués en même temps.

2. Procédé selon la revendication 1, **caractérisé en ce que** la dépressurisation active et le rinçage ne sont effectués qu'après interruption de l'admission et de l'évacuation.

3. Procédé selon l'une des revendications 1 à 2, le rinçage étant effectué à contre-courant du sens principal d'écoulement du réacteur.

4. Procédé selon l'une des revendications 1 à 3, le sens principal d'écoulement s'étendant dans la direction verticale et le rinçage étant effectué de haut en bas.

5. Procédé selon l'une des revendications 1 à 4, un gaz inerte étant utilisé comme substance inerte pour le rinçage.

6. Procédé selon l'une des revendications 1 à 4, un liquide inerte étant utilisé comme substance inerte pour le rinçage.

7. Procédé selon l'une des revendications 1 à 6, le mélange produit étant éliminé du réacteur par rinçage au moyen de la substance inerte sous pression.

8. Procédé selon l'une des revendications 1 à 7, le mélange produit éliminé du réacteur par rinçage étant éliminé par rinçage dans un récipient collecteur pourvu d'une deuxième substance inerte.

9. Procédé selon la revendication 8, le mélange produit étant réparti dans le récipient collecteur à l'aide d'un moyen de mélange et mélangé à la deuxième substance inerte.

10. Procédé selon la revendication 9, une pompe à jet ou une buse ou un répartiteur perforé tubulaire étant utilisé(e) comme moyen de mélange.

11. Procédé selon l'une des revendications 8 à 10, la deuxième substance inerte étant un liquide inerte.
